# EUROPEAN PATENT APPLICATION

(11) **EP 3 165 714 A1**
(43) Date of publication of application: **10.05.2017**
(21) Application number: 16197129.6
(22) Date of filing: 03.11.2016
(51) Int. Cl.: F01D 5/14, F01D 9/04

(54) **TURBINE AIRFOIL**

(30) Priority: 09.11.2015 US 201514936253
(71) Applicant: General Electric Company, Schenectady, NY 12345 (US)
(72) Inventor: BHAUMIK, Soumyik Kumar, 560066 Bangalore (IN); POTTER, Brian Denver, Greenville, SC South Carolina 29615 (US); CHOUHAN, Rohit, 560066 Bangalore (IN); BRUNT, Georgia Fleming, Greenville, SC South Carolina 29615 (US)
(74) Representative: Lee, Brenda

(57) **Abstract**

A turbine airfoil 36 configured to be disposed in a turbine 16 includes a suction side 50, a pressure side 48, and a first protrusion 52 disposed on the suction side 50, a second protrusion 54 disposed on the pressure side 48, or both. The first protrusion 52 is disposed on the suction side 50 of the turbine airfoil 36 and protrudes relative to the other portion of the suction side 50 in a first direction transverse to both the radial 32 and axial directions 28. The second protrusion 54 is disposed on the pressure side 48 of the turbine airfoil 36 and protrudes relative to the other portion of the pressure side 48 in a second direction transverse to both the radial 32 and axial directions 28, and opposite the first direction.

## Description

### BACKGROUND

The subject matter disclosed herein relates to turbomachines, and more particularly, the last airfoil stage in the turbine of a turbomachine.

A turbomachine, such as a gas turbine engine, may include a compressor, a combustor, a turbine, and a diffuser. Gasses are compressed in the compressor, combined with fuel, and then fed into to the combustor, where the gas/fuel mixture is combusted. The high temperature and high energy exhaust fluids are then fed to the turbine, where the energy of the fluids is converted to mechanical energy. Upon exit of the turbine, the fluids enter the diffuser, where the velocity of the fluids is decreased and the pressure of the fluids is increased. Secondary flows, purge flows, and/or swirl at the exit of a turbine and the inlet of the diffuser may negatively impact the performance of the diffuser.

### BRIEF DESCRIPTION

Certain embodiments commensurate in scope with the originally claimed subject matter are summarized below. These embodiments are not intended to limit the scope of the claimed subject matter, but rather these embodiments are intended only to provide a brief summary of possible forms of the claimed subject matter. Indeed, the claimed subject matter may encompass a variety of forms that may be similar to or different from the embodiments set forth below.

In a first embodiment, a system includes a turbine airfoil configured to be disposed in a turbine. The airfoil includes a suction side, a pressure side, and a first protrusion disposed on the suction side, a second protrusion disposed on the pressure side, or both. The suction side extends between a leading edge of the turbine airfoil and a trailing edge of the turbine airfoil in an axial direction and transverse to a longitudinal axis of the turbine airfoil, and extends a height of the turbine airfoil in a radial direction along the longitudinal axis. The pressure side is disposed opposite the suction side and extends between the leading edge of the turbine airfoil and the trailing edge of the turbine airfoil in the axial direction, and extends the height of the airfoil in the radial direction. The first protrusion is disposed on the suction side of the turbine airfoil and protrudes relative to the other portion of the suction side in a first direction transverse to both the radial and axial directions. The second protrusion is disposed on the pressure side of the turbine airfoil and protrudes relative to the other portion of the pressure side in a second direction transverse to both the radial and axial directions, and opposite the first direction.

In a second embodiment, an apparatus a turbine including a first annular wall, a second annular wall, and a last stage. The last stage includes a plurality of airfoils disposed annularly between the first and second annular walls about a rotational axis of the turbine. Each airfoil of the plurality of airfoils includes a height extending between the first and second annular walls, a leading edge, a trailing edge disposed downstream of the leading edge, a suction side extending between the leading edge and the trailing edge in an axial direction, and extending the height of the airfoil in a radial direction, a pressure side disposed opposite the suction side and extending between the leading edge of the airfoil and the trailing edge of the airfoil in the axial direction, and extending the height of the airfoil in the radial direction, and a first protrusion disposed on the suction side of the airfoil that protrudes in a first direction transverse to a radial plane extending from the rotational axis, a second protrusion disposed on the suction side of the airfoil that protrudes in a second direction transverse to a radial plane extending from the rotational axis, opposite the first direction, or both.

In a third embodiment, a turbomachine includes a compressor, a combustor, and a turbine. The turbine includes a plurality of airfoils disposed about a rotational axis. Each airfoil of the plurality of airfoils includes a suction side, a pressure side, and a first protrusion disposed on the suction side, a second protrusion disposed on the pressure side, or both. The suction side extends between a leading edge of the airfoil and a trailing edge of the airfoil in an axial direction and transverse to a longitudinal axis of the airfoil, and extends a height of the airfoil in a radial direction along the longitudinal axis. The pressure side is disposed opposite the suction side and extends between the leading edge of the airfoil and the trailing edge of the airfoil in the axial direction, and extends the height of the airfoil in the radial direction. The first protrusion is disposed on the suction side of the airfoil protrudes relative to the other portion of the suction side in a first direction transverse to both the radial and axial directions. The second protrusion is disposed on the pressure side of the airfoil protruding relative to the other portion of the pressure side in a second direction transverse to both the radial and axial directions, opposite the first direction.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1 is a diagram of one embodiment of a turbomachine in accordance with aspects of the present disclosure;
FIG. 2 is a perspective view of an embodiment of a last-stage airfoil in accordance with aspects of the present disclosure;
FIG. 3 is a top view of two adjacent airfoils in accordance with aspects of the present disclosure;
FIG. 4 is a plot of throat distribution in accordance with aspects of the present disclosure;
FIG. 5 is a plot of axial chord distribution in accordance with aspects of the present disclosure;
FIG. 6 is a plot of maximum thickness distribution in accordance with aspects of the present disclosure;
FIG. 7 is a plot of maximum thickness divided by axial chord distribution in accordance with aspects of the present disclosure;
FIG. 8 is a section view of one embodiment of a last stage airfoil in accordance with aspects of the present disclosure;
FIG. 9 is a plot of the normalized total pressure, absolute (PTA) profile at the inlet of the diffuser in accordance with aspects of the present disclosure;
FIG. 10 is a plot of the swirl profile at the inlet of the diffuser in accordance with aspects of the present disclosure; and
FIG. 11 is a plot of the pressure recovery coefficient (Cₚ) of the diffuser in a turbomachine in accordance with aspects of the present disclosure.

### DETAILED DESCRIPTION

One or more specific embodiments of the present disclosure will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present subject matter, the articles "a," "an," "the," and "said" are intended to mean that there are one or more of the elements. The terms "comprising," "including," and "having" are intended to be inclusive and mean that there may be additional elements other than the listed elements.

Following combustion in a gas turbine engine, exhaust fluids exit the combustor and enter the turbine. The turbine exit flow profile (i.e., the radial profile of total pressure and swirl) may be indicative of diffuser performance. Low root reaction in the last stage of the turbine may introduce strong secondary flows (i.e., flows transverse to the main flow direction) and/or purge flows, which may introduce undesirable total pressure absolute (PTA) and swirl profiles at the inlet of the diffuser. Additionally, if the resonant frequency of the airfoil is not carefully chosen, the resonant frequency of the airfoil may cross with the drivers, resulting in undue stress on the airfoil that may lead to structural failure. A last stage airfoil design having an increased thickness at about 60% span may be used to produce desirable turbine exit flow profiles and manipulate secondary flows and avoid frequency crossings with the drivers.

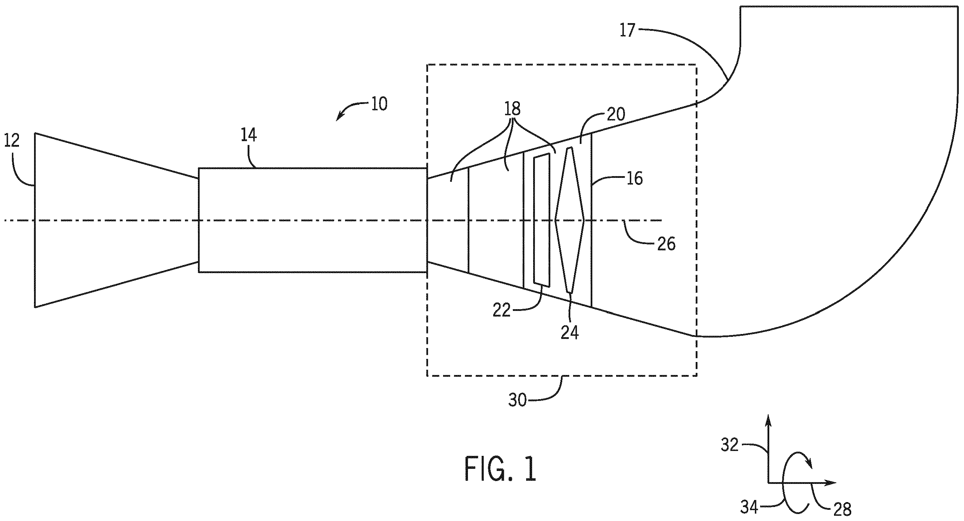

Turning now to the figures, FIG. 1 is a diagram of one embodiment of a turbomachine 10 (e.g., a gas turbine engine). The turbomachine 10 shown in FIG. 1 includes a compressor 12, a combustor 14, a turbine 16, and a diffuser 17. Air, or some other gas, is compressed in the compressor 12, mixed with fuel, fed into the combustor 14, and then combusted. The exhaust fluids are fed to the turbine 16 where the energy from the exhaust fluids is converted to mechanical energy. The turbine 16 includes a plurality of stages 18, including a last stage 20. Each stage 18 may include a rotor, coupled to a rotating shaft, with an annular array of axially aligned blades, buckets, or airfoils, which rotates about a rotational axis 26, and a stator with an annular array of nozzles. Accordingly, the last stage 20 may include a last nozzle stage 22 and a last airfoil stage 24. For clarity, FIG. 1 includes a coordinate system including an axial direction 28, a radial direction 32, and a circumferential direction 34. Additionally, a radial plane 30 is shown. The radial plane 30 extends in the axial direction 28 (along the rotational axis 26) in one direction, and then extends outward in the radial direction 32.

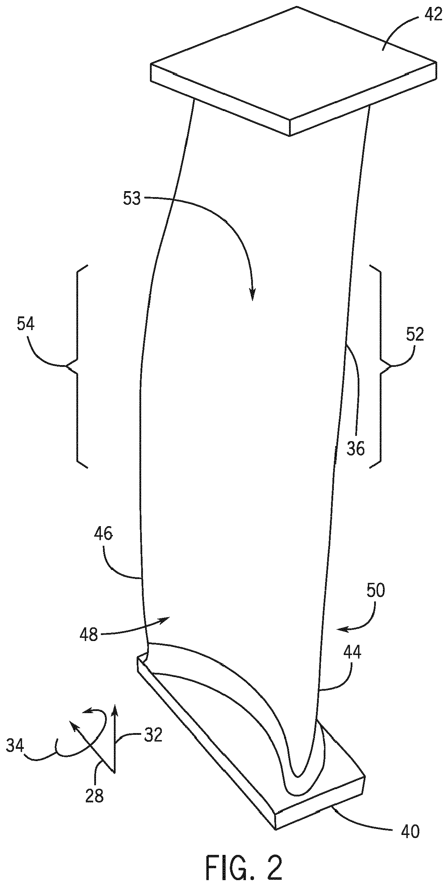

FIG. 2 is a perspective view (i.e., looking generally downstream) of an embodiment of a last stage airfoil 36. The airfoils 36 in the last stage 20 extend in a radial direction 32 between a first annular wall 40 and a second annular wall 42. The airfoils 36 are disposed circumferentially 34 about a hub (e.g., second annular wall 42). Each airfoil 36 may have an airfoil type shape and be configured to aerodynamically interact with the exhaust fluids from the combustor 14 as the exhaust fluids flow generally downstream through the turbine 16 in the axial direction 28. Each airfoil 36 has a leading edge 44, a trailing edge 46 disposed downstream, in the axial direction 28, of the leading edge 44, a pressure side 48, and a suction side 50. The pressure side 48 extends in the axial direction 28 between the leading edge 44 and the trailing edge 46, and in the radial direction 32 between the first annular wall 40 and the second annular wall 42. The suction side 50 extends in the axial direction 28 between the leading edge 44 and the trailing edge 46, and in the radial direction 32 between the first annular wall 40 and the second annular wall 42, opposite the pressure side 48. The airfoils 36 in the last stage 20 are configured such that the pressure side 48 of one airfoil 36 faces the suction side 50 of an adjacent airfoil 36. As the exhaust fluids flow toward and through the passage 38 between airfoils 36, the exhaust fluids aerodynamically interact with the airfoils 36 such that the exhaust fluids flow with an angular momentum relative to the axial direction 28. A last airfoil stage 24 populated with airfoils 36 having an increased thickness at about 60% of the span, wherein the span is the distance in the radial direction 32 between the first annular wall 40 and the second annular wall 42 (e.g., 0% span occurs at the root of the airfoil and 100% span occurs at the tip of the airfoil), may help to improve the structural integrity of the airfoil 36 by tuning the resonant frequency to avoid crossings with drivers.. The increased thickness 53 may manifest itself as a protrusion 52 on the suction side 50, a protrusion 54 on the pressure side 48, or both.

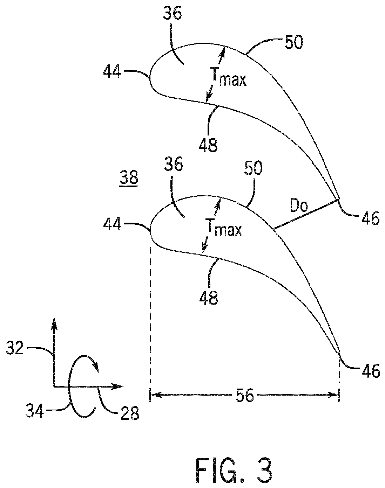

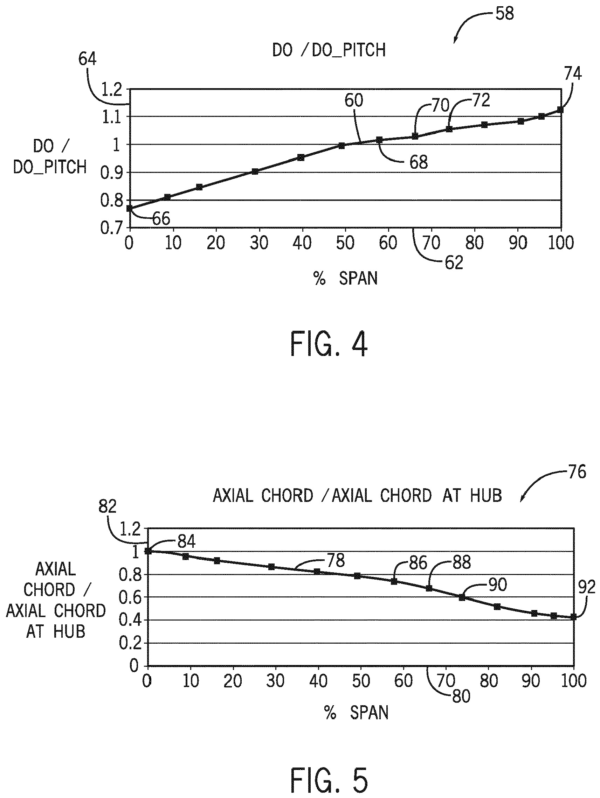

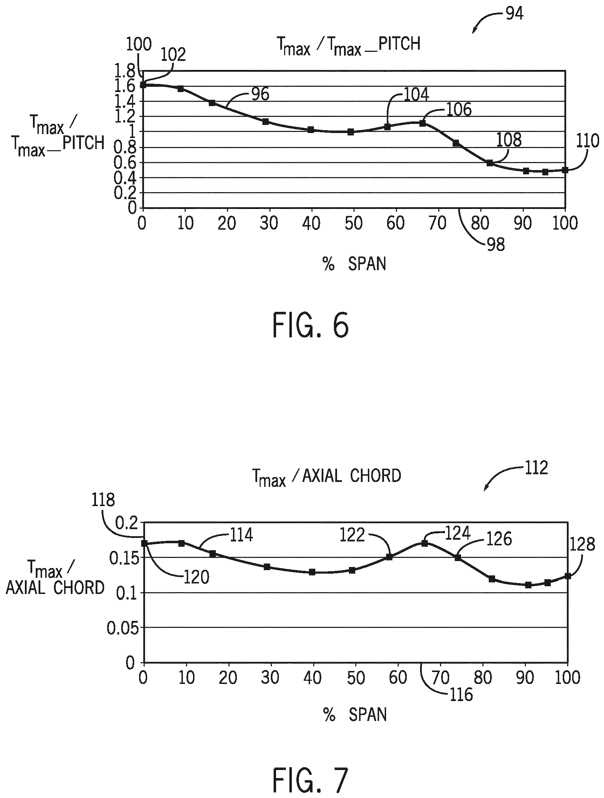

FIG. 3 is a top view of two adjacent airfoils 36. Note that the suction side 50 of the bottom airfoil 36 faces the pressure side 48 of the top airfoil 36. The axial chord 56 is the dimension of the airfoil 36 in the axial direction 28. The passage 38 between two adjacent airfoils 36 of a stage 18 defines a throat Dₒ distribution, measured at the narrowest region of the passage 38 between adjacent airfoils 36. Fluid flows through the passage 38 in the axial direction 28. This throat Dₒ distribution across the span from the first annular wall 40 to the second annular wall 42 will be discussed in more detail in regard to FIG. 4. The axial chord 56 distribution will be discussed with regard to FIG. 5. The maximum thickness of each airfoil 36 at a given percent span is shown as Tₘₐₓ. The Tₘₐₓ distribution across the height of the airfoil 36 will be discussed in more detail in regard to FIGS. 6 and 7.

FIG. 4 is a plot 58 of throat Dₒ distribution defined by adjacent airfoils 36 in the last airfoil stage 24 and shown as curve 60. The horizontal axis 62, x, represents the percent span between the first annular wall 40 and the second annular wall 42 in the radial direction 32. That is, 0% span represents the first annular wall 40 and 100% span represents the second annular wall 42, and any point between 0% and 100% corresponds to a percent distance between the annular walls 40, 42, in the radial direction 32 along the height of the airfoil. The vertical axis 64, y, represents Dₒ, the shortest distance between two adjacent airfoils 36 at a given percent span, divided by the D_{o_Pitch}, the Dₒ at 50% span. Dividing Dₒ by the D_{o_Pitch} makes the plot 58 non-dimensional, so the curve 60 remains the same as the airfoil stage 24 is scaled up or down for different applications. One could make a similar plot for a single size of turbine in which the vertical axis is just Dₒ.

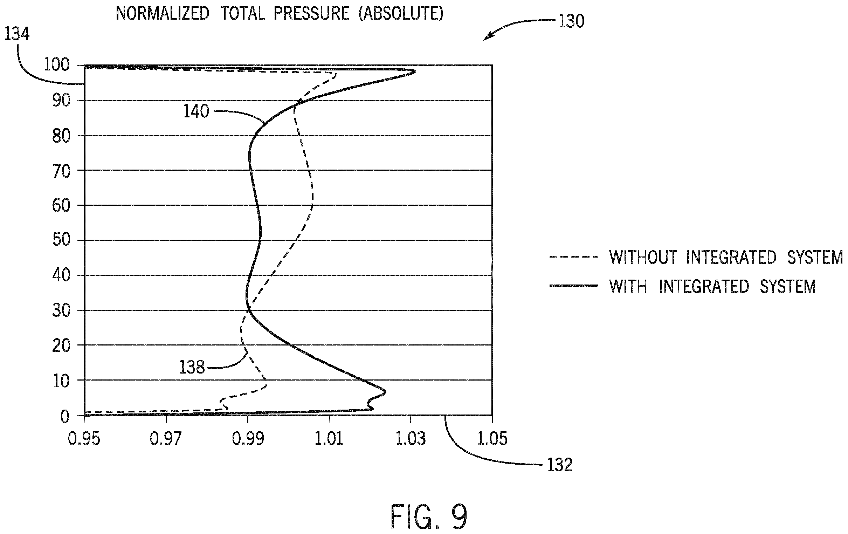

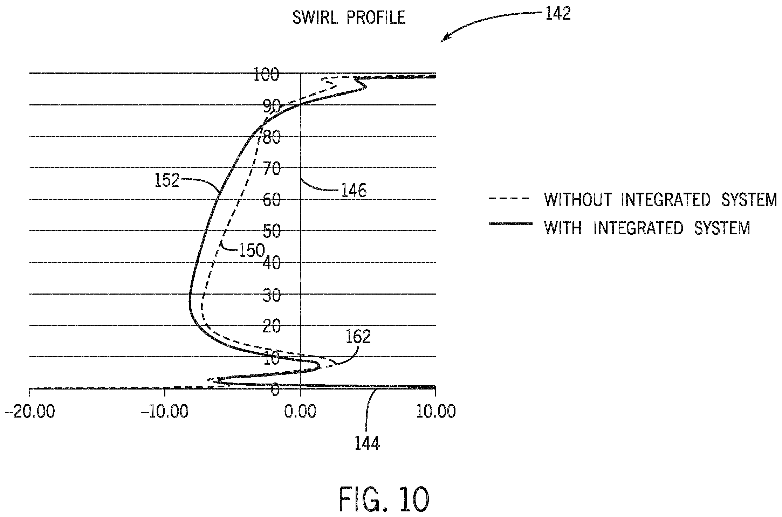

As can be seen in FIG. 4, as one moves in the radial direction 32 from the first annular wall 40, or point 66, around point 68, or about 55% span, the curve 60 begins to level off. This represents the increased thickness 53 in the airfoil. Around point 70, (e.g., approximately 65% span), the throat distribution begins to grow. Around point 72 (approximately 75% span), the flat spot in the throat distribution due to the increased thickness of the airfoil has almost completely receded. The second annular wall 74 occurs at point 74. The throat distribution shown in FIG. 4 may help to improve diffuser performance in two ways. First, the throat distribution helps to produce desirable turbine 16 exit flow profiles (e.g., the PTA profile shown in FIG. 9 and the swirl profile shown in FIG. 10). Second, the throat distribution shown in FIG. 4 may help to manipulate secondary flows (e.g., flows transverse to the main flow direction) and/or purge flows near the first annular wall 40 (e.g., hub).

FIG. 5 is a plot 76 of the distribution of the axial chord 56 at a given percent span divided by the axial chord 56 at the hub (that is, at 0% span) as curve 78. The horizontal axis 80, x, represents the percent span between the first annular wall 40 and the second annular wall 42 in the radial direction 32. The vertical axis 82, y, represents the axial chord divided by the axial chord at the hub. Dividing the axial chord by the axial chord at the hub makes the plot 76 non-dimensional, so the curve 78 remains the same as the airfoil stage 24 is scaled up or down for different applications. One could make a similar plot for a single size of turbine 16 in which the horizontal axis is just the axial chord 56 at a given percent span.

As can be seen in FIG. 5, as one moves in the radial direction 32 from the first annular wall 40, or point 84. Just before point 86, or about 55% span, the chord 56 distribution begins to diverge from a linear airfoil. Around point 88, (e.g., approximately 65% span), the chord length 56 peaks and begins to recede at a steeper slope. Around point 90 (approximately 75% span), the chord 56 has almost completely receded. The second annular wall 74 occurs at point 92. Alternatively, the shape of the airfoil 36 could be described as two non-linear tapering sections separated by an increased thickness 53. As shown in FIG. 5, the first non-linear tapering section occurs from 0% span (point 84) to about 55% span (just before point 86). The end of the first non-linear tapering section transitions into the increased thickness 53. The chord then transitions into the second non-linear tapering section, which occurs from about 65% span (point 88) to 100% span (point 92). A last stage airfoil design with the axial chord distribution shown in FIG. 5 may help to tune the resonant frequency of the airfoil in order to avoid crossings with drivers. For example, an airfoil with a linear design may have a resonant frequency of 400 Hz, whereas the airfoil 36 with an increased thickness 53 around 65% span may have a resonant frequency of 450 Hz. If the resonant frequency of the airfoil is not carefully tuned to avoid crosses with the drivers, operation may result in undue stress on the airfoil 36 and possible structural failure. Accordingly, an airfoil 36 design with the axial chord distribution shown in FIG. 5 may increase the operational lifespan of the airfoil 36.

FIG. 6 is a plot 94 of the distribution of Tₘₐₓ/Tₘₐₓ at 50% span as curve 96. The horizontal axis 98, x, represents the percent span between the first annular wall 40 and the second annular wall 42 in the radial direction 32. The vertical axis 100, y, represents Tₘₐₓ, the maximum thickness of the airfoil 36 at a given percent span, divided by the Tₘₐₓ at 50% span. Dividing Tₘₐₓ by Tₘₐₓ at 50% span makes the plot 94 non-dimensional, so the curve 96 remains the same as the airfoil stage 24 is scaled up or down for different applications. One could make a similar plot for a single size of turbine 16 in which the horizontal axis is just Tₘₐₓ.

As can be seen in FIG. 6, as one moves in the radial direction 32 from the first annular wall 40, or point 102, the value of Tₘₐₓ/T_{max_pitch} at 50% span steadily falls. Just before point 104 or about 50% span, the Tₘₐₓ begins to diverge. Around point 106, (e.g., approximately 65% span), the Tₘₐₓ hits its maximum and begins to recede. Around point 108 (approximately 80% span), the Tₘₐₓ has almost completely receded. The second annular wall 74 occurs at point 110. As was discussed with regard to FIG. 5, the shape of the airfoil 36 may alternatively be described as two non-linear tapering sections separated by the increased thickness 53. In FIG. 6, the first non-linear tapering section occurs from 0% span (point 102) to about 55% span (just before point 104). The end of the first non-linear tapering section transitions into the increased thickness 53. The increased thickness then transitions into the second non-linear tapering section, which occurs from about 65% span (point 106) to 100% span (point 110). A last stage airfoil design with the Tₘₐₓ distribution shown in FIG. 6 may help to tune the resonant frequency of the airfoil in order to avoid crossings with drivers. Accordingly, an airfoil 36 design with the Tₘₐₓ distribution shown in FIG. 6 may increase the operational lifespan of the airfoil 36.

FIG. 7 is a plot 112 of the distribution of Tₘₐₓ/axial chord as curve 114. The horizontal axis 116, x, represents the percent span between the first annular wall 40 and the second annular wall 42 in the radial direction 32. The vertical axis 118, y, represents Tₘₐₓ/axial chord, the maximum thickness of the airfoil 36 at a given percent span, divided by the axial chord 56, the dimension of the airfoil 36 in the axial direction 28. Dividing Tₘₐₓ by the axial chord 56 makes the plot 112 non-dimensional, so the curve 114 remains the same as the airfoil stage 24 is scaled up or down for different applications.

As can be seen in FIG. 7, as one moves in the radial direction 32 from the first annular wall 40, or point 120, Tₘₐₓ/axial chord steadily falls until the increased thickness 53, represented by points 122, 124, and 126, protrudes outward. The Tₘₐₓ/axial chord reaches its maximum protrusion at point 124 and then recedes. At point 128, the airfoil 36 meets the second annular wall 42. As was discussed with regard to FIGS. 5 and 6, the shape of the airfoil 36 may alternatively be described as two non-linear tapering sections separated by the increased thickness 53. In FIG. 7, the first non-linear tapering section occurs from 0% span (point 120) to about 45% span (just before point 122). The end of the first non-linear tapering section transitions into the increased thickness 53. The increased thickness then transitions into the second non-linear tapering section, which occurs from about 65% span (point 124) to 100% span (point 128). A last stage airfoil design with the Tₘₐₓ/axial chord distribution shown in FIG. 7 may help to tune the resonant frequency of the airfoil in order to avoid crossings with drivers. Accordingly, an airfoil 36 design with the Tₘₐₓ/axial chord distribution shown in FIG. 6 may increase the operational lifespan of the airfoil 36.

A last airfoil stage having airfoils with the Do distribution discussed with regard to FIG. 4 helps to reduce secondary flows and produce desirable PTA and swirl profiles. By reducing secondary flows and producing desirable PTA and swirl profiles, the disclosed last stage airfoil design may improve diffuser performance and result in a substantial increase in power output for the turbine 16. A last stage airfoil design with the various Tₘₐₓ and axial chord distribution shown in FIGS. 5-7 may help to tune the resonant frequency of the airfoil in order to avoid crossings with drivers. If the resonant frequency of the airfoil is not carefully tuned to avoid crosses with the drivers, operation may result in undue stress on the airfoil 36 and possible structural failure. Accordingly, an airfoil 36 design with the various Tₘₐₓ and axial chord distribution shown in FIGS. 5-7 may increase the operational lifespan of the airfoil 36.

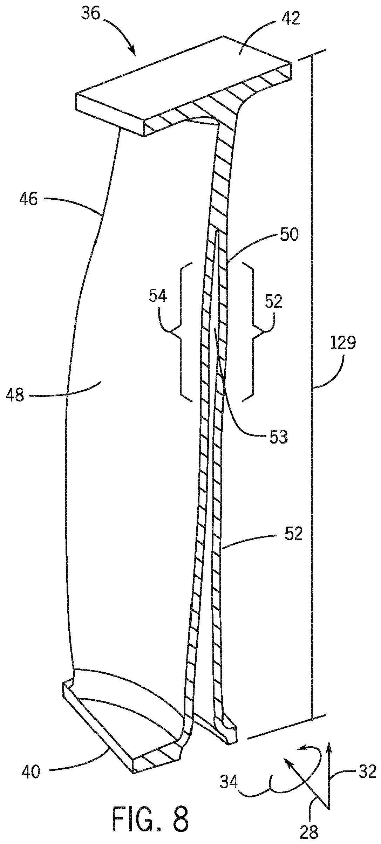

FIG. 8 is a side section view of an airfoil 36 having a height 129 and an increased thickness 53 (including a protrusion 52 on the suction side and a protrusion 54 on the pressure side) at about 60% of the height 129. Though the increased thickness 53 manifests itself as a suction side protrusion 52 and a pressure side protrusion 54 in FIG. 8, it should be understood that the increased thickness 53 may be centered or biased toward the suction side 50 or the pressure side 48, such that the airfoil 36 may have a protrusion 52 on the suction side 50 and not the pressure side 48, or have a protrusion 54 on the pressure side 48 and not the suction side 50. Alternatively, the increased thickness may be slightly biased such that the protrusion 52 on the suction side 50 may be larger than the protrusion 54 on the pressure side 48, or vice versa. It should be understood that he height 129 corresponds to the span between the first annular wall 40 and the second annular wall 42. For example, it should be understood that 60% of the height 129 is approximately the same as 60% of the span between the first annular wall 40 and the second annular wall 42. As shown in FIG. 8, the pressure side protrusion 54 protrudes from the pressure side 48 and the suction side protrusion 52 protrudes from the suction side 50 in a direction transverse to the radial plane 30 extending from the rotational axis 26 out in the radial direction 32 in one direction, and in the axial direction 28 in a second direction. Though the airfoil 36 shown in FIG. 8 is hollow, it should be understood that this is merely for clarity. In some embodiments, the airfoil 36 may be solid.

As may be seen in FIG. 8, the increased thickness 53 may protrude at a position approximately 60% of the height 129 of the airfoil 36 (or 60% of the span from the first annular wall 40 to the second annular wall 42). That is, the profile of an airfoil 36 with an increased thickness 53 may begin to diverge from the hypothetical profile of a linear airfoil 36 (i.e., an airfoil 36 without an increased thickness) at any point from 30% of the height 129 to approximately 50% of the height 129. For example, the increased thicknesses 53 may begin to protrude from a linear airfoil at approximately 30%, 35%, 40%, 45%, or 50% of the height 129, or anywhere in between. The increased thicknesses 53 may reach its maximum between approximately 50% and 70% of height 129. For example, the maximum thickness 53 may occur at approximately 50%, 55%, 60%, 65%, or 70% of the height 129, or anywhere in between. Upon reaching the maximum thickness 53, the profile of the airfoil 36 with increased thickness 53 begins to converge with the profile of a linear airfoil. The protrusions 52, 54 may end (i.e., the profile of the airfoil 36 with the increased thickness 53 converges with the hypothetical profile of a linear airfoil) at a point between approximately 65% and 90% of the height 129. That is, the increased thicknesses 52, 54 may end at a point approximately 65%, 70%, 75%, 80%, 85%, or 90% of the height 129, or anywhere in between. In some embodiments, the protrusions 52, 54 may extend along the entire length of the pressure side 48 and/or the suction side 50 in the axial direction 28, from the leading edge 44 to the trailing edge 46. In other embodiments, the protrusions 52, 54 may extend only along a portion of the pressure side 48 and/or the suction side 50, between the leading edge 44 and the trailing edge 46. A last airfoil stage 24 populated with airfoils 36 having protrusions 52, 54 on the pressure side 48 and/or the suction side 50 produces desirable exit flow profiles and manipulates secondary flows, thus improving the performance of the diffuser. Additionally, an airfoil 36 with an increased thickness 53 around 60% span may help to tune the resonant frequency of the airfoil in order to avoid crossings with drivers. If the resonant frequency of the airfoil is not carefully tuned to avoid crosses with the drivers, operation may result in undue stress on the airfoil 36 and possible structural failure. Accordingly, an airfoil 36 design with the increased thickness shown in FIG. 8 may increase the operational lifespan of the airfoil 36.

FIG. 9 shows a plot 130 of the normalized total pressure absolute (PTA) profile at the inlet of the diffuser. The specific plot 130 shown in FIG. 9 is from an embodiment of a turbomachine 10 using a last airfoil stage 24 populated with airfoils 36 having an increased thickness. It should be understood that the normalized PTA plot 130 is merely an example and that different embodiments may have different PTA profiles. In FIG. 9, the horizontal axis 132 represents the unitless normalized pressure total absolute (PTA). Normalized PTA is defined as the PTA at a given percent span, divided by the average PTA across the whole span. The vertical axis 134 represents the percent span, wherein the first annular wall 40 occurs at 0% span and the second annular wall 42 occurs at 100% span. Curve 138 represents the PTA profile of a design using a last airfoil stage 24 populated with linear airfoils 36. Curve 140 represents the normalized PTA profile of a system using a last airfoil stage 24 populated with airfoils 36 having a shape and/or distribution similar to that described with regard to FIGS. 4-7. In general, spikes in PTA near the first annular wall 40 and the second annular wall 42 improve the performance of the diffuser 18. Accordingly, the preferred profile spikes near the first annular wall (e.g., hub) from 0-30% span, is relatively flat in the middle 50%, and spikes again near the second annular wall (e.g., casing) from 80-100% span. As can be seen in FIG. 9, curve 138 lacks relative spikes in normalized PTA near the first annular wall 40 and the second annular wall 42 and has a higher PTA than the target curve 136 in the middle of the span. The curve 140 has the desired spikes near the first annular wall 40 and the second annular wall 42, unlike curve 138 for the system that does not utilize a last airfoil stage 24 populated with airfoils 36 having a shape and/or distribution similar to that described with regard to FIGS. 4-7. Additionally, the normalized PTA curve 140 is much flatter in the middle 50% than the curve 138 for the system that does not utilize a last airfoil stage 24 populated with airfoils 36 of increased thickness.

Similarly, FIG. 10 shows a plot 142 of the swirl profile at the inlet of the diffuser. The plot 142 in FIG. 10 is from an embodiment of a turbomachine 10 using a last airfoil stage 24 populated with airfoils 36 having a shape and/or distribution similar to that described with regard to FIGS. 4-7. Accordingly, the swirl profile plot 142 is merely an example. Different embodiments may have different swirl profiles. In FIG. 10, the horizontal axis 144 represents the angle of swirl in degrees relative to the axial direction 28. The vertical axis 146 represents the percent span, wherein the first annular wall 40 occurs at 0% span and the second annular wall 42 occurs at 100% span. Curve 150 represents the swirl profile of a design using a last airfoil stage 24 populated with linear airfoils 36. Curve 152 represents the swirl profile of a system using a last airfoil stage 24 populated with airfoils 36 having a shape and/or distribution similar to that described with regard to FIGS. 4-7. In general, lower swirl near the first annular wall 40 (e.g., at approximately 8% span location 162) and linear slope mid-span (e.g., 20% span to 80% span) improve the performance of the diffuser. As shown in FIG. 10, curve 152 has lower swirl angles near the first annular wall 40 (e.g., at approximately 8% span location 162) and has a linear slope in the middle of the span. The curve 152 has more of the desirable qualities than curve 150 for the system that does not utilize the disclosed techniques.

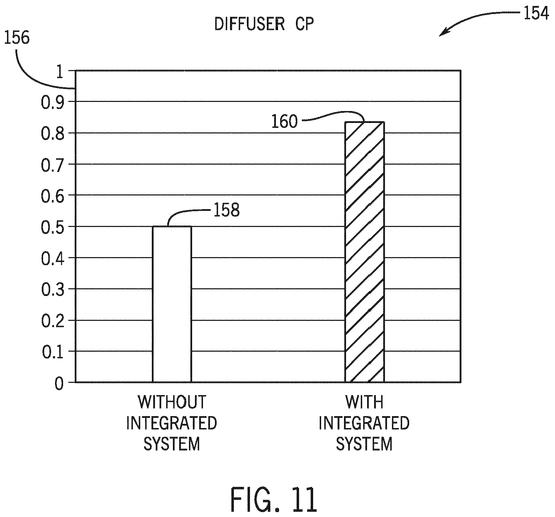

FIG. 11 is a plot 154 that shows the improved pressure recovery coefficient (Cₚ) of the diffuser in a turbomachine 10 having a last airfoil stage 24 populated with airfoils 36 having an increased thickness around 60% span. The vertical axis 156 represents Cₚ values from 0 to 1. Cₚ, the ratio of the pressure recovered by the diffuser, is one way to measure diffuser performance. Cₚ varies between 0 and 1. A Cₚ value of 0 means the diffuser recovers none of the pressure of the fluid passing through it. A Cₚ value of 1 means that the diffuser recovers all of the pressure of the fluid passing through it. Generally, a higher Cₚ value is desirable. As indicated by bar 158, one design that does not utilize a last airfoil stage 24 populated with airfoils 36 having the disclosed shape has a Cₚ value of approximately 0.5. Alternatively, as indicated by bar 160, one embodiment of a turbomachine 10 having a last airfoil stage 24 populated with airfoils 36 having the disclosed shape has a Cₚ value of about 0.82. As with FIGS. 9 and 10, the Cₚ plot 154 shown in FIG. 11 is merely an example. Other embodiments using the disclosed techniques may produce different Cₚ values.

Technical effects of the disclosed embodiments include improvement the performance of the diffuser in a number of different ways. First, the airfoil 36 design helps to produce desirable turbine 16 exit flow profiles (e.g., the PTA profile shown in FIG. 9 and the swirl profile shown in FIG. 10). Specifically, PTA spikes and lower swirl angle near the first annular wall (e.g., approximately 8% span location 162) improves the pressure recovery of the diffuser. Second, the airfoil 36 design and the throat distribution shown in FIG. 4 may help to manipulate secondary flows (i.e., flows transverse to the main flow direction) and/or purge flows near the hub (e.g., the first annular wall 40). Third, an airfoil 36 with an increased thickness 53 around 60% span may help to tune the resonant frequency of the airfoil in order to avoid crossings with drivers. If the resonant frequency of the airfoil is not carefully tuned to avoid crosses with the drivers, operation may result in undue stress on the airfoil 36 and possible structural failure. Accordingly, an airfoil 36 design with the increased thickness may increase the operational lifespan of the airfoil 36.

This written description uses examples to disclose the subject matter and also to enable any person skilled in the art to practice the subject matter, including making and using any devices or systems and performing any incorporated methods. The patentable scope of the subject matter is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A turbine airfoil configured to be disposed in a turbine comprising:
   a suction side extending between a leading edge of the turbine airfoil and a trailing edge of the turbine airfoil in an axial direction and transverse to a longitudinal axis of the turbine airfoil, and extending a height of the turbine airfoil in a radial direction along the longitudinal axis;
   a pressure side disposed opposite the suction side and extending between the leading edge of the turbine airfoil and the trailing edge of the turbine airfoil in the axial direction, and extending the height of the airfoil in the radial direction; and
   a first protrusion disposed on the suction side of the turbine airfoil protruding relative to the other portion of the suction side in a first direction transverse to both the radial and axial directions, a second protrusion disposed on the pressure side of the turbine airfoil protruding relative to the other portion of the pressure side in a second direction transverse to both the radial and axial directions, and opposite the first direction, or both.
2. The turbine airfoil of clause 1, wherein the first and second protrusions begin to protrude at a starting height at a first percentage of the height of the airfoil, reach first and second maximum protrusions, respectively, at a second percentage of the height of the airfoil, and cease to protrude at an ending height at a third percentage of the height of the airfoil.
3. The turbine airfoil of any preceding clause, wherein both the first and second maximum protrusions of the first and second protrusions occur between about 50% and about 70% of the height of the airfoil.
4. The turbine airfoil of any preceding clause, wherein both the first and second maximum protrusions of the first and second protrusions occur between about 55% and about 65% of the height of the airfoil.
5. The turbine airfoil of any preceding clause, wherein the first protrusion extends at least more than half of a length of the suction side between the leading edge and the trailing edge.
6. The turbine airfoil of any preceding clause, wherein the first protrusion extends along an entire length of the suction side.
7. The turbine airfoil of any preceding clause, wherein the second protrusion extends at least more than half of a length of the pressure side between the leading edge and the trailing edge.
8. The turbine airfoil of any preceding clause, wherein an axial chord is a dimension of the airfoil in the axial direction, and wherein an axial chord distribution, moving across the height of the airfoil in the radial direction from a proximal end to a distal end, is defined as the axial chord at a percent of the height divided by the axial chord at the proximal end, wherein the axial chord distribution is characterized by a first non-linear tapering section spanning from 0% height to about 55% height, and a second non-linear tapering section spanning from about 65% height to 100% height, separated by substantially flat section.
9. A system comprising:
   a turbine comprising:
      a first annular wall;
      a second annular wall; and
      a last stage comprising a plurality of airfoils disposed annularly between the first and second annular walls about a rotational axis of the turbine, wherein each airfoil of the plurality of airfoils comprises:
         a height extending between the first and second annular walls;
         a leading edge;
         a trailing edge disposed downstream of the leading edge;
         a suction side extending between the leading edge and the trailing edge in an axial direction, and extending the height of the airfoil in a radial direction;
         a pressure side disposed opposite the suction side and extending between the leading edge of the airfoil and the trailing edge of the airfoil in the axial direction, and extending the height of the airfoil in the radial direction;
         a first protrusion disposed on the suction side of the airfoil that protrudes in a first direction transverse to a radial plane extending from the rotational axis, a second protrusion disposed on the suction side of the airfoil that protrudes in a second direction transverse to a radial plane extending from the rotational axis, opposite the first direction, or both.
10. The system of any preceding clause, wherein the first and second protrusions begin to protrude at a starting height at a first percentage of the height of the airfoil, reach first and second maximum protrusions, respectively, at a second percentage of the height of the airfoil, and cease to protrude at an ending height at a third percentage of the height of the airfoil.
11. The system of any preceding clause, wherein the first protrusion reaches a maximum protrusion between about 50% and about 70% of the height of the airfoil.
12. The system of any preceding clause, wherein the first protrusion reaches a maximum protrusion between about 55% and about 65% of the height of the airfoil.
13. The system of any preceding clause, wherein the second protrusion reaches a maximum protrusion between about 50% and about 70% of the height of the airfoil.
14. The system of any preceding clause, wherein the second protrusion reaches a maximum protrusion between about 55% and about 65% of the height of the airfoil.
15. The system of any preceding clause, wherein the first protrusion extends at least more than half of a length of the suction side between the leading edge and the trailing edge.
16. The system of any preceding clause, wherein an axial chord is a dimension of each airfoil of the plurality of airfoils in the axial direction, and wherein an axial chord distribution, moving across the height of the airfoil in the radial direction from the first annular well to the second annular wall, is defined as the axial chord at a percent of the height divided by the axial chord the first annular wall, wherein the axial chord distribution is characterized by a first non-linear tapering section spanning from 0% height to about 55% height, and a second non-linear tapering section spanning from about 65% height to 100% height, separated by substantially flat section.
17. The system of any preceding clause, wherein a throat is a passage between two adjacent airfoils of the plurality of airfoils, and wherein a throat distribution, moving across the height of the airfoil in the radial direction from the first annular wall to the second annular wall, is defined as the throat at a percent span between the first annular wall and the second annular wall, divided by the throat at 50% span, wherein the throat distribution grows steadily from 0% span to about 55% span is substantially flat between about 55% span and about 65% span, and then grows steadily from about 65% span to 100% span.
18. A turbomachine, comprising:
   a compressor;
   a combustor; and
   a turbine comprising a plurality of airfoils disposed about a rotational axis, wherein each airfoil of the plurality of airfoils comprises:
      a suction side extending between a leading edge of the airfoil and a trailing edge of the airfoil in an axial direction and transverse to a longitudinal axis of the airfoil, and extending a height of the airfoil in a radial direction along the longitudinal axis;
      a pressure side disposed opposite the suction side and extending between the leading edge of the airfoil and the trailing edge of the airfoil in the axial direction, and extending the height of the airfoil in the radial direction; and
      a first protrusion disposed on the suction side of the airfoil protruding relative to the other portion of the suction side in a first direction transverse to both the radial and axial directions, a second protrusion disposed on the pressure side of the airfoil protruding relative to the other portion of the pressure side in a second direction transverse to both the radial and axial directions, opposite the first direction, or both.
19. The turbomachine of any preceding clause, wherein both the first and second maximum protrusions of the first and second protrusions occur between about 50% and about 70% of the height of the airfoil.
20. The turbomachine of any preceding clause, wherein both the first and second maximum protrusions of the first and second protrusions occur between about 55% and about 65% of the height of the airfoil.

## Claims

1. A turbine airfoil (36) configured to be disposed in a turbine (16) comprising:
a suction side (50) extending between a leading edge (44) of the turbine airfoil (36) and a trailing edge (46) of the turbine airfoil (36) in an axial direction (28) and transverse to a longitudinal axis (26) of the turbine airfoil (36), and extending a height (129) of the turbine airfoil (36) in a radial direction (32) along the longitudinal axis (26);
a pressure side (48) disposed opposite the suction side (50) and extending between the leading edge (44) of the turbine airfoil (36) and the trailing edge (46) of the turbine airfoil (36) in the axial direction (28), and extending the height (129) of the airfoil (36) in the radial direction (32); and
a first protrusion (52) disposed on the suction side (50) of the turbine airfoil (36) protruding relative to the other portion of the suction side in a first direction transverse to both the radial (32) and axial directions (28), a second protrusion (54) disposed on the pressure side (48) of the turbine airfoil (36) protruding relative to the other portion of the pressure side (48) in a second direction transverse to both the radial (32) and axial directions (28), and opposite the first direction, or both.

2. The turbine airfoil (36) of claim 1, wherein the first and second protrusions (52, 54) begin to protrude at a starting height (104) at a first percentage of the height (129) of the airfoil (36), reach first and second maximum protrusions (52, 54), respectively, at a second percentage of the height (129) of the airfoil, and cease to protrude at an ending height (108) at a third percentage of the height (129) of the airfoil (36).

3. The turbine airfoil (36) of claim 2, wherein both the first and second maximum protrusions of the first and second protrusions (52, 54) occur between about 50% and about 70% of the height (129) of the airfoil (36).

4. The turbine airfoil of claim 2, wherein both the first and second maximum protrusions of the first and second protrusions (52, 54) occur between about 55% and about 65% of the height (129) of the airfoil (36).

5. The turbine airfoil (36) of any of claims 1 to 4, wherein the first protrusion (52) extends at least more than half of a length of the suction side (50) between the leading edge (44) and the trailing edge (46).

6. The turbine airfoil (36) of claim 5, wherein the first protrusion (52) extends along an entire length of the suction side (50).

7. The turbine airfoil (36) of any preceding claim, wherein the second protrusion (54) extends at least more than half of a length of the pressure side (48) between the leading edge (44) and the trailing edge (46).

8. The turbine airfoil (36) of any preceding claim, wherein an axial chord (56) is a dimension of the airfoil (36) in the axial direction (28), and wherein an axial chord (56) distribution, moving across the height (129) of the airfoil (36) in the radial direction (32) from a proximal end to a distal end, is defined as the axial chord (56) at a percent of the height (129) divided by the axial chord (56) at the proximal end, wherein the axial chord distribution is **characterized by** a first non-linear tapering section spanning from 0% height to about 55% height, and a second non-linear tapering section spanning from about 65% height to 100% height, separated by substantially flat section.
